# EUROPEAN PATENT SPECIFICATION

(11) **EP 4 394 664 B1**
(45) Date of publication and mention of the grant of the patent: **02.12.2026**
(21) Application number: 22217128.2
(22) Date of filing: 29.12.2022
(51) Int. Cl.: G06N 3/094, G06N 20/20, G06N 3/045, G06N 3/09, G06N 3/098, B60W 60/00, G06N 3/091, G06N 3/096, G06N 3/0985

(54) **AUTOMATED DATA GENERATION BY NEURAL NETWORK ENSEMBLES**
AUTOMATISIERTE DATENERZEUGUNG DURCH NEURONALE NETZWERKENSEMBLES
GÉNÉRATION AUTOMATISÉE DE DONNÉES PAR DES ENSEMBLES DE RÉSEAUX NEURONAUX

(43) Date of publication of application: 03.07.2024
(73) Proprietor: Zenseact AB, 417 56 Gothenburg (SE)
(72) Inventor: VERBEKE, Willem, 412 60 Gothenburg (SE); LJUNGBERGH, William, 414 78 Gothenburg (SE)
(74) Representative: Zacco Sweden AB

(56) References cited:
- US-A1- 2020 226 430
- US-A1- 2022 318 557
- US-B1- 11 526 693

## Description

### TECHNICAL FIELD

The disclosed technology relates to methods and systems for deep learning models and data generation for such deep learning models. In particular, but not exclusively the disclosed technology relates to automated data generation for neural network learning models and neural network ensembles for recognition and characterization of various scenarios in a surrounding environment of a vehicle travelling on a road.

### BACKGROUND

Machine learning algorithms and neural networks have gained a strong position in solving complicated problems in various domains such as classification, detection, identification, and segmentation tasks to name a few. The ability of these algorithms to perform complex and multidimensional tasks involving almost infinite data variations and combinations makes these models unequivocally well suited for the evermore-expanding big data applications of today.

One specific area for which utilization of neural networks and deep learning models has presented ground-breaking possibilities is the emergence of autonomous vehicles.

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (0 - 5) of driving automation, and in particular for level 4 and 5.

ADS solutions have already found their way into a majority of the new cars on the market with utilization prospects being only on the rise in the future. An ADS may be construed as a complex combination of various components that can be defined as systems where perception, decision making, and operation of the vehicle are performed by electronics and machinery instead of or in tandem with a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage.

An imperative aspect of achieving reliable autonomous functionality for the intended autonomous and semi-autonomous vehicles is to obtain a comprehensive understanding of the scenarios occurring in the surrounding environment of the vehicle. The unpredictable and dynamic scenarios including situations, events or objects in the surrounding environment of the vehicle and on the roads on which the vehicle is travelling can involve nearly endless varieties and complexities.

The neural network learning models have been used to some extent for characterization of such complex scenarios. However, the deep learning algorithms rely heavily on stringent training and verification schemes involving collecting and labelling a large amount of data representing various scenarios. Furthermore, at their core, these algorithms are only powerful interpolation tools, and thus cannot be expected to accurately extrapolate beyond the reach of their training regimes.

There is thus a pressing need in the art for novel and improved solutions and applications involving utilization of neural networks for characterization of complex and rare scenarios, with high accuracy, speed and certainty.

US 11 526 693 B1 discloses systems and methods for training an ensemble of machine learning models with a focus on feature engineering. For example, the training of the models encourages each machine learning model of the ensemble to rely on a different set of input features from the training data samples used to train the machine learning models of the ensemble. However, instead of telling each model explicitly which features to learn, in accordance with the disclosed implementations, ML models of the ensemble may be trained sequentially, with each new model trained to disregard input features learned by previously trained ML models of the ensemble and learn based on other features included in the training data samples.

US 2020/226430 A1 discloses methods and devices which implement mechanisms for obtaining contextual variables of the vehicle's environment for use in determining the accuracy of predictions of objects within the vehicle's environment.

US 2022/318557 A1 discloses apparatuses, systems, and techniques to identify out-of-distribution input data in one or more neural networks. The technique includes training one or more neural networks to infer a plurality of characteristics about input information based, at least in part, on the one or more neural networks being independently trained to infer each of the plurality of characteristics about the input information.

### SUMMARY

The herein disclosed technology seeks to mitigate, alleviate or eliminate one or more of the aboveidentified deficiencies and disadvantages in the prior art to address various problems relating to utilization of neural networks for characterization of complex and rare scenarios.

The invention is set forth in the independent claims and further embodiments are defined in the dependent claims.

The term exemplary is in the present context to be understood as serving as an instance, example or illustration.

The present inventors have realized that by the proposed solution comprising the methods and systems herein the shortcomings associated with information gaps in the training data sets for the ML algorithms can be efficiently and rapidly mitigated. The proposed data-driven approach of the present disclosure provides a flexible, cost-efficient, and rapid approach for generating training data for training neural networks and ML algorithms, specifically for scenarios for which many samples of real-world data neither can be collected nor may be available. This in turn leads to drastic improvements on reliability of deep learning models providing scalability, speed and reproducibility in addressing a large variety of scenarios, which may occur in the surrounding environment of the vehicles involving multiple environmental variables or conditions. The presented methods and systems exploit ensembles of neural networks or ML algorithms to identify and characterize cases in which the ML algorithms provide unreliable predictions due to extrapolating outside the boundaries of their respective training data sets. Such scenarios may lead to discrepancies in the prediction outputs of the ML algorithm ensembles referred also herein as out-of-distribution (OOD) scenarios. Introducing the characterized OOD scenarios into the training regime of the neural networks improves the reliability and robustness of these ML algorithms when exposed to unconventional real-world challenges.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further embodiments of the presented methods and systems are defined in the dependent claims. It should be emphasized that the term "comprises/comprising" when used in this specification is taken to specify the presence of stated features, integers, steps, or components.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings. The drawings are not to scale.
Figs. 1a-1c show schematic block diagrams in accordance with several embodiments of the present disclosure.
Fig. 2 illustrates a schematic top view of a road and at least one vehicle traveling on the road in accordance with several embodiments of the present disclosure.
Fig. 3 shows a schematic flowchart illustrating a method in accordance with several embodiments of the present disclosure.
Fig. 4 shows a schematic side view illustration of the vehicle comprising the control system in accordance with some embodiments of the present disclosure.

### DETAILED DESCRIPTION

The present disclosure will now be described in detail with reference to the accompanying drawings, in which some example embodiments of the disclosed technology are shown. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. The "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another.

In the following description of exemplary embodiments, the same reference numerals denote the same or similar components.

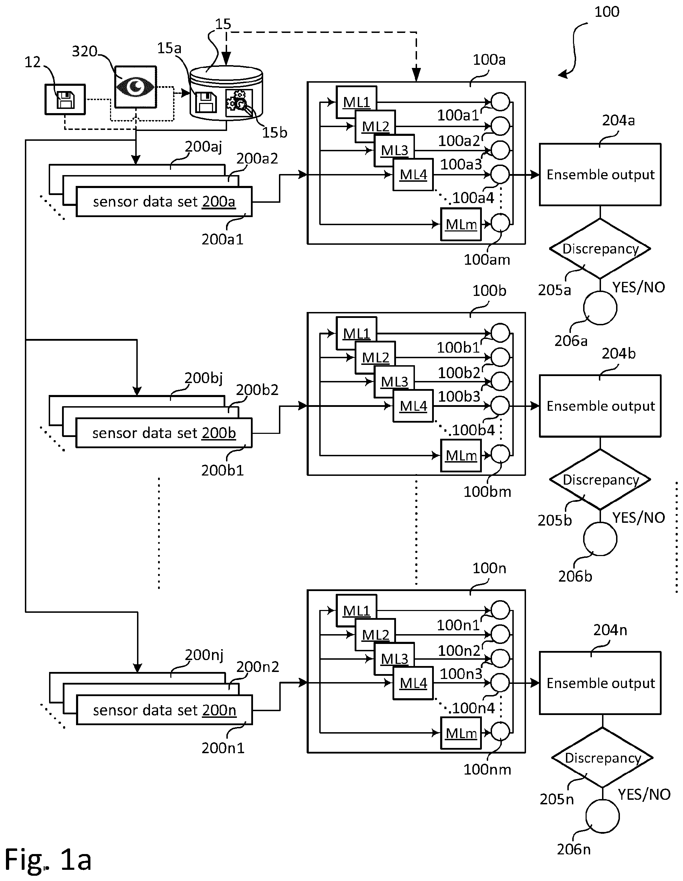

Figs. 1a-1c show schematic block diagrams illustrating a cluster 100 of two or more ensembles 100a - 100n of ML algorithms. Each ML algorithm ensemble 100a - 100n comprises a plurality of ML algorithms ML₁-MLₘ according to the presented technology, wherein "m" is a real number denoting the number of ML algorithms comprised in each ensemble. The ML ensemble cluster 100 is accordingly implemented and deployed according to various aspects and embodiments of the present disclosure.

The ML algorithms ML₁-MLₘ comprised in each ensemble 100a - 100n may be similar ML algorithms tailored for that specific ensemble. By being similar algorithms in the present context it is to be construed that ML algorithms ML₁-MLₘ belonging to a respective ML algorithm ensemble 100a- 100n have very similar or the same architectures, very similar or the same initialization parameters, and are expected to largely exhibit the same behaviour when exposed to input data similar to the training data set of that ML ensemble.

Each ensemble 100a - 100n may comprise different and customized number of ML algorithms ML₁-MLₘ specifically appointed to that ensemble. Thus, "m" may represent different number of ML algorithms for each respective ensemble and is simply used herein to indicate that there may be more than one ML algorithm comprised in each ensemble 100a - 100n.

It should be appreciated that the above-mentioned one or more designated ML algorithms ML₁-MLₘ comprised in each ensemble 100a - 100n, may be trained at least partly based on the same or similar training data sets e.g. a first data set curated specifically for each respective ensemble 100a - 100n. In other words, each ML algorithm ensemble may have its own curated training data set. Thus, the one or more ML algorithm ensembles 100a - 100n may be trained at least partly based on the first training data set specifically curated for each respective ML algorithm ensemble.

By being trained at least partly based on the same or similar training data sets in the present context it is to be construed that one or more of the ML algorithms comprised in the respective ensemble are trained using a particularly curated training data set, or different versions of that data set or sub-sets of that data set. In some embodiments, some of the one or more ML algorithms may be trained on a first sub-set of the designated training data set e.g. a first sub-set of the first training data set, and some other ML algorithms may be trained on a second sub-set of the designated training data set e.g. a second sub-set of the first training data set. In some examples, different versions or compilations of the first training data set may be used to train one or more of the ML algorithms comprised in the respective ensemble.

By the first training data set in the present context it is meant a training data set comprising labelled and classified data utilized for initially training the ML algorithms comprised in each ensemble. The first training data set may be curated specifically for each respective ML ensemble 100a- 100n. In some embodiments, one or more of the ML ensembles comprised in the cluster 100 may be trained with the same first training data set. In some embodiments, one or more of the ML ensembles comprised in the cluster 100 may be trained with different versions or sub-sets of the same first training data set.

In some embodiments and aspects, the training data set may further comprise a synthetic data set formed for training the ML algorithm ensemble on artificially constructed realities.

Fig. 1a shows the block diagram of the trained ML algorithm ensembles 100a - 100n comprised in the ML algorithm cluster 100. Each ML algorithm ensemble 100a - 100n is configured for receiving a respective input data set 200a - 200n. Each input data set 200a - 200n comprises one or more input data samples, e.g., 200a1 - 200aj, 200b1 - 200bj, .... , 200n1 - 200nj, wherein "j" is a real number simply used for indicating one or more input data samples being comprised in each respective input data set. The dotted line in Fig. 1a indicates the plurality of input data samples comprised in each input data set 200a - 200n. The number of input data samples comprised in each input data set 200a - 200n may be different and customized for each respective ML algorithm ensemble associated with its respective input data set. Thus, "j" may represent different numbers of input data samples for the input data set of each ensemble and is simply used herein to indicate that there may be more than one input data sample comprised in each input data set 200a - 200n.

The ML algorithm cluster 100 and thus each ensemble 100a - 100n may be obtained from a server 15 or a log file, memory or data storage 15a of the server 15. Each obtained ML algorithm ensemble 100a - 100n may have been previously trained with a training data set and stored in the data storage 15a for subsequent execution. The obtained ML algorithm ensembles 100a - 100n may have been trained with their designated training data sets curated for training each ML algorithm comprised in its respective ML algorithm ensemble 100a - 100n, as mentioned earlier.

The one or more ML algorithm ensembles 100a - 100n may be trained continuously and repeatedly with their respective training data set e.g. the first training data set. According to several embodiments and aspects, the training data set e.g. the first training data set may be modified, updated, or complemented in various stages of the training process. In some aspects and embodiments, the trained ML algorithm ensembles 100a - 100n may be considered as preliminarily trained ML algorithm ensembles 100a - 100n trained with a current version of the training data set that is continuously updated by obtaining further data samples and data classes. Thus, the one or more ML algorithm ensembles 100a - 100n may be continuously retrained with updated versions of their designated training data sets.

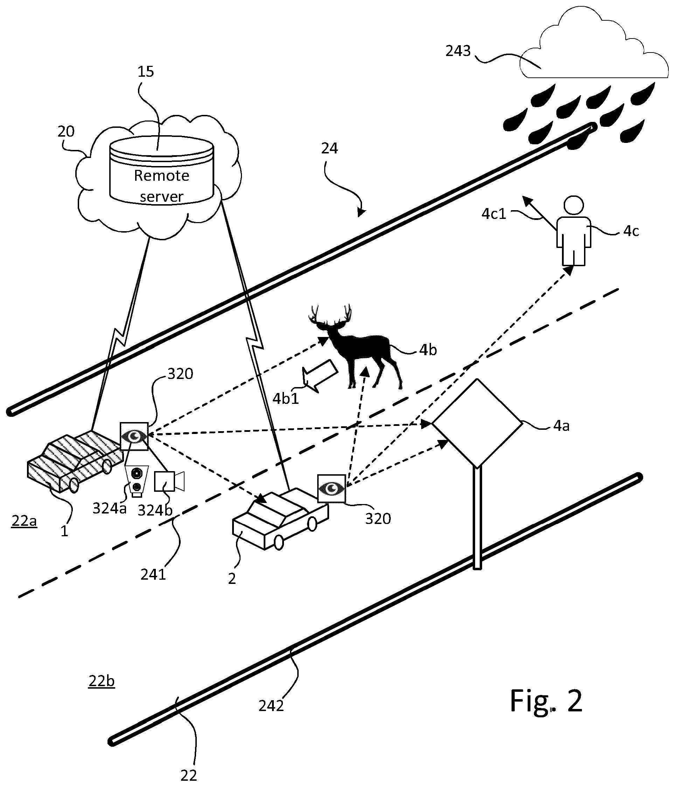

The first training data set may be obtained and curated based on various data collection and classification approaches. The first training data set may be obtained from the server 15, and may be formed based on the information of a surrounding environment of a vehicle. In several embodiments and aspects, the first training data set may at least partly be formed based on sensor data obtained by a sensor system 320 of a vehicle 1, 2 travelling on a road 22 as explained further with reference to Fig. 2. The sensor data may comprise related information and be representative of a variety of scenarios which may occur in the surrounding environment of the vehicle 1, 2. The sensor data may be transmitted to the server 15 or may be stored in a memory 12 of the vehicle 1 for future transmission to the server 15 and/or for local utilization in the vehicle 1, 2.

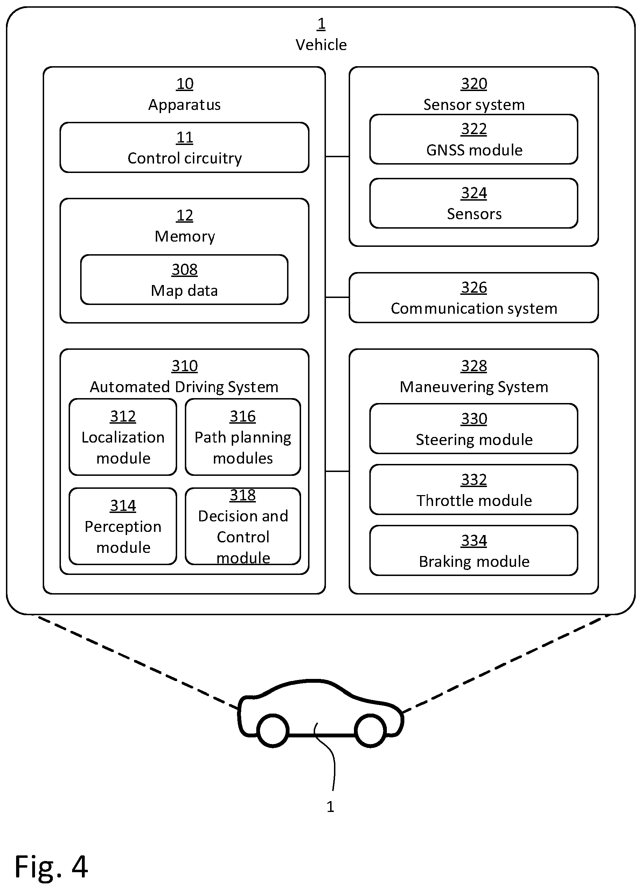

Various aspects and embodiments of the presented technology, and the corresponding systems and methods may be implemented and executed by means of processing circuitry comprising one or more processors. The processing circuitry may at least partly be comprised in a control system 15b or apparatus 15b implemented in the data center 15 or server 15. In some embodiments and aspects, the control system 10 or apparatus 10 may be comprised in a vehicle such as vehicles 1, 2 as described in more detail with reference to Fig. 2 and Fig. 4.

As mentioned earlier, machine learning algorithms and neural networks such as supervised machine learning algorithms, may be conventionally trained, tested and verified based on a massive amount of real-world data. The training data is usually obtained through driving the vehicle 1, or a fleet of vehicles comprising the vehicle 1, or a fleet of test vehicles on various types of roads under a variety of environmental conditions and for suitable periods of time to collect and evaluate large data sets of detected scenarios on the road. However, the very large variety of objects and scenarios which may occur on the road and in the surrounding environment of the vehicle render the task of data collection and formation of comprehensive training data sets practically unattainable. This is even more relevant for scenarios when the objects or events involve rare or less frequent circumstances for which adequate amount of data may not be easily collected. Even further, simply collecting more data may not be enough to comprehensively characterize such extremely rare scenarios, which ultimately leads to a diminished reliably of the ML algorithms for handling these scenarios. In other words, when unpredictable situations are encountered, neural networks may produce, albeit with high confidence, sporadic and unreliable predictions due to information gaps in their training data sets.

The present inventors have realized that by the proposed solution herein the shortcomings associated with information gaps in the training data sets for the ML algorithms can be efficiently and rapidly mitigated. The proposed data-driven approach of the present disclosure provides a flexible, cost-efficient, and rapid approach for generating training data for training neural networks and ML algorithms, specifically for scenarios for which many samples of real-world data neither can be collected nor may be available. This in turn leads to drastic improvements on reliability of deep learning models providing scalability, speed and reproducibility in addressing a large variety of scenarios, which may occur in the surrounding environment of the vehicles involving multiple environmental variables or conditions. The presented methods and systems exploit ensembles of neural networks or ML algorithms to identify and characterize cases in which the ML algorithms provide unreliable predictions due to extrapolating outside the boundaries of their respective training data sets. Such scenarios may lead to discrepancies in the prediction outputs of the ML algorithm ensembles referred also herein as out-of-distribution (OOD) scenarios. Introducing the characterized OOD scenarios into the training regime of the neural networks improves the reliability and robustness of these ML algorithms when exposed to unconventional real-world challenges.

Moving on, the ML models ML₁-MLₘ comprised in each ML model ensemble 100a - 100n are trained at least partly by the first training data set to perform a variety of tasks including object classification, detection, segmentation tasks. The plurality of ML algorithms comprised in each ML algorithm ensemble 100a- 100n are configured to produce corresponding prediction outputs, e.g., 100a1 - 100am, 100b1 - 100bm, . . . . , 100n1 - 100nm for each data sample 200a1 - 200aj, 200b1 - 200bj, .... , 200n1 - 200nj comprised in the designated sensor data set 200a - 200n of each ensemble 100a - 100n. For instance, the ML algorithms ML₁-MLₘ of the ensemble 100a in Fig. 1a generate the prediction outputs 100a1 - 100am for the input data sample 200a1, and so forth. Prediction outputs will similarly be generated by the ML algorithms ML₁-MLₘ of the ensemble 100a for the other input data samples comprised in the input data set 200a.

In several aspects and embodiments, sensor data representative of a scenario, in the surrounding environment of the vehicle 1, 2 is obtained. The scenario is observed by at least two sensor devices 324 comprised in the sensor system 320 of the vehicle 1, 2. Accordingly, the sensor data comprises at least two sensor data sets, wherein each sensor data set comprises information provided by a designated sensor device 324a - 324n of the at least two sensor devices 324. Each sensor data set comprises one or more data samples being representative of the observed scenario. In several embodiments and aspects, an input data set 200 for the ML algorithm cluster 100 may be formed based on the obtained sensor data. The input data set 200 comprises at least two sensor data sets 200a - 200n, each sensor data set being associated with its respective sensor device 324a - 324n and its designated ML algorithm ensemble 100a - 100n. In several aspects and embodiments, each sensor device 324a - 324n of the sensor devices 324 of the sensor system 320 may be a different sensor device type configured to perceive the vehicle's 1, 2 surroundings. The sensor device types may comprise any one of radar, LIDAR, sonar, camera, navigation system e.g. GPS, odometer and/or inertial measurement units (IMUs), upon which advanced control systems may interpret sensory information to identify appropriate navigation paths, as well as obstacles, free-space areas, and/or relevant signage. Each sensor data set of the two or more sensor data sets 200a - 200n may be associated with a specific sensor device type. For instance, sensor data set 200a may be associated to a vehicle-mounted LIDAR sensor 324a. Similarly, sensor data set 200b may be associated to a camera sensor 324b of the vehicle 1, 2, and so forth. In some aspects and embodiments, several sensor devices of each sensor device type may be comprised in the sensor system 320 of the vehicle 1, 2. Accordingly, each sensor device 324a - 324n may be associated with its own sensor data set 200a - 200n. In other words, several sensor data sets associated with each type of sensor devices may be comprised in the input data set 200. In several aspects and embodiments, each ML algorithm ensemble 100a - 100n is configured to obtain the formed sensor data set of the two or more sensor data sets 200a - 200n designated for that ML algorithm ensemble 100a- 100n. Each ML algorithm ensemble 100a - 100n is accordingly configured to generate, for each of the one or more sensor data samples 200a1- 200aj, 200b1- 200bj, .... , 200n1- 200nj comprised in the designated sensor data set 200a - 200n of that ensemble 100a - 100n, an ensemble prediction output 204a - 204n.

The ensemble prediction output 204a - 204n of each ensemble 100a - 100n, for each of the corresponding one or more sensor data samples 200a1 - 200aj, 200b1 - 200bj, .... , 200n1 - 200nj of that ensemble, comprises prediction outputs 100a1 - 100am, . . . , 100n1 - 100nm generated by each of the ML algorithms ML₁-MLₘ comprised in that ML ensemble 100a - 100n for that sensor data sample.

The ML algorithm ensemble cluster 100 is configured such that in response to fulfilment of a first discrepancy status A and a second discrepancy status B, an annotation is generated for the one or more sensor data samples associated with the first discrepancy status A based on the ensemble prediction output of at least one ML algorithm ensemble associated with the second discrepancy status B.

In more detail, the first discrepancy status A comprises a determined discrepancy 205a - 205n for the ensemble-prediction output 204a -204n of at least one ML algorithm ensemble of the two or more ML algorithm ensembles 100a - 100n comprised in the cluster 100.

The second discrepancy status B comprises absence of a determined discrepancy 205a - 205n for the ensemble-prediction output 204a - 204n of at least one other ML algorithm ensemble of the two or more ML algorithm ensembles 100a - 100n comprised in the cluster 100. In other words, the second discrepancy status B corresponds to congruency in the ensemble-prediction output 204a - 204n of at least one other ML algorithm ensemble of the two or more ML algorithm ensembles 100a - 100n comprised in the cluster 100.

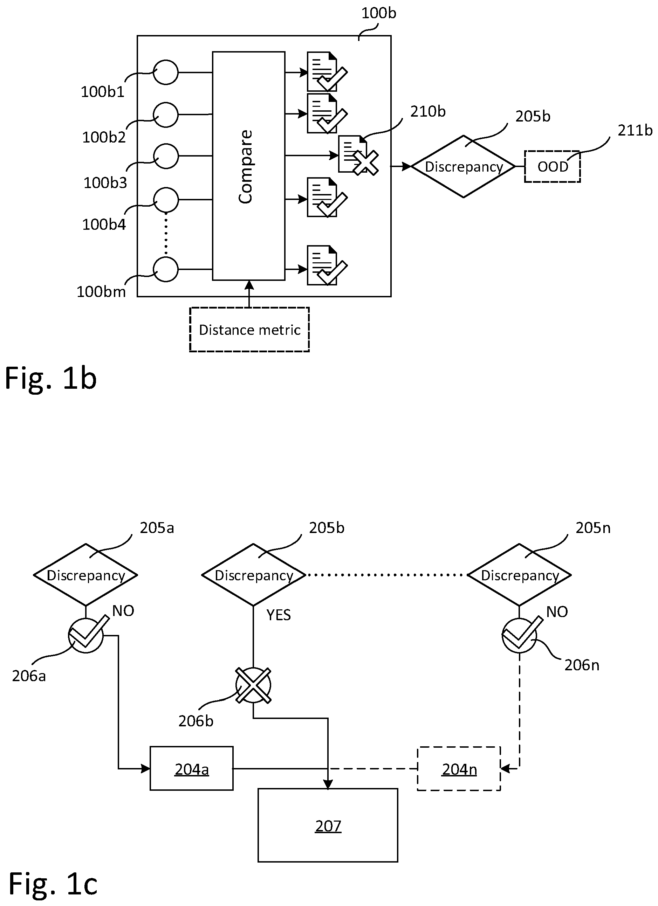

In Figs. 1a and 1c, the above determination for each ML algorithm ensemble 100a - 100n is shown by status circles 206a - 206n indicating the discrepancy status as "YES" or "NO" for each ensemble prediction output 240 a - 204n. The discrepancy status "YES" belongs to the first discrepancy status A i.e. "determined discrepancy" e.g. status circle 206b in Fig. 1c. The discrepancy status "NO" belongs to the second discrepancy status B i.e. "absence of determined discrepancy" e.g. status circles 206a and 206n in Fig. 1c.

To elucidate this further, an example comprising some of the systems and methods of the present disclosure will be introduced herein. In this example, the ML algorithms ML₁-MLₘ comprised in the ML ensemble 100a and 100b may be configured for solving an object detection task, using image data of a target object e.g. one or more images of an object 4a-4c as depicted in Fig. 2. In this example, the at least one object 4a-4c has been observed by a LIDAR sensor device 324a as well as a camera sensor device 324b of the vehicle 1. Observation of the at least one object 4a-4c is a scenario which has occurred in the surrounding environment of the vehicle 1 while driving on a road portion 24 of the road 22.

The ML ensembles 100a and 100b are configured to produce prediction outputs 204a and 204b comprising probability scores for the coordinates of the target object 4a-4c in the image data. The ML ensemble 100a is associated with the LIDAR sensor device 324a and the ML ensemble 100b is associated with the camera sensor device 324b. The LIDAR 324a has produced sensor data set 200a and the camera has produced sensor data set 200b based on observation of the at least one object 4a-4c.

Each sensor data sample 200a1 - 200aj of the sensor data set 200a is provided as input to the ML ensemble 100a to produce ensemble prediction output 204a for each sensor data sample. Similarly, each sensor data sample 200b1 - 200bj of the sensor data set 200b is provided as input to the ML ensemble 100b to produce ensemble prediction output 204a for each sensor data samples. The produced prediction outputs i.e. the coordinates for the same target object using the same image data by all the ML models ML₁-MLₘ comprised in the ML model ensembles 100a and 100b can then be used to probe for anomalous input data samples. For instance, it could be surveyed whether the ML algorithms generate substantially homogeneous predictions for the position coordinates of the target object 4a-4c based on its corresponding image data.

The ML algorithm may utilize several methods and approaches known in the art for forming estimates and predictions of the at least one object. By way of example only, the object detection ML algorithms may output a per-pixel map e.g. in case of a camera image or per-point map e.g. in case of a LIDAR representation with confidence measures for each pixel or point denoting whether the pixel or point belongs to an object or not. For instance, a threshold value may be introduced each pixel confidence measure may be compared with the threshold value. The pixels with confidence measures exceeding the threshold value can then be identified as belonging to the respective object. The approved pixels may be clustered and a final object confidence measure may be selected, e.g., to be the same as the confidence measure of the pixel having the highest confidence measure. Other parameters, such as the bounding box prediction, 3D distance, etc. may also be determined per pixel. The object detection ML model would similarly output a map of pixels, wherein each pixel is associated with a plurality of parameters as mentioned above. The accumulation of these parameters may then be used by the ML algorithm to form its predictions on the object. Several established approaches such as generating postprocessed 3D estimations, etc. for processing the parameters and forming predictions may be used as accessible by the skilled person in the art.

Discrepancies on the predictions of the ML algorithm may be surveyed and identified at any stage of the object detection process e.g. while estimating one or more of the above-mentioned parameters such as per-pixel or per-point map outputs before or after any processing steps for forming predictions on an object and identifying OOD data samples.

Accordingly, a comparison may be made for the output coordinates of each ML algorithm with the output coordinates produced by each of the rest of the ML algorithms ML₁-MLₘ in the ensembles 100a, 100b by utilizing similarity metrics and distance measurements e.g. by means of cosine similarity or Euclidian distance metrics or determination of entropy amongst the prediction outputs. Evidently, any other attributes of the objects or scenarios than the position coordinates may be inspected and OOD data samples may be extracted.

A discrepancy in the ensemble-prediction output is determined when the prediction output generated, for at least one particular data sample of the one or more data samples, by at least one of the ML algorithms comprised in the ensemble is incompatible with the prediction outputs generated by the one or more of the other ML algorithms of the ensemble.

For the sake of example only, assume the ensemble prediction output 204b of ensemble 100b to sensor data sample 200b1 comprises the prediction outputs 100b1 - 100bm of each ML algorithm comprised in the ensemble 100b. As shown in Fig. 1b, ML3 generates a prediction output 100b3 to the input data sample 200b1 which corresponds to a sporadic and dissimilar position coordinates for the target object 4a-4c compared to the prediction outputs of the one or more of the other ML algorithms comprised in the ensemble 100b.

When this incompatibility 210b amongst the prediction outputs of one or several of the ML algorithms is identified, discrepancy 205b in the prediction output 204b of the ML algorithm ensemble 100b for the sensor data sample 200b1 is determined.

The input data sample 200b1 causing the discrepancy in the prediction outputs of the ML algorithms ML₁-MLₘ may accordingly be labelled 211b as an out-of-distribution (OOD) data sample 200b1.

Therefore, the ML algorithms of the ensemble 100b produce incongruent prediction outputs not conforming to the acceptable prediction output-variation measures. Thus, the discrepancy is determined for the prediction output 204a of the ensemble 100b for the observations of the camera sensor device 324b. Thus, the discrepancy "YES" belonging to the second discrepancy status A is generated.

The OOD data may refer to anomalous data or data generating significantly different prediction outputs for the ML algorithms of the ML ensembles 100a - 100n. The OOD data may also be different from training data comprised in the first training data set used initially to train the ML ensemble 100a - 100n.

Distribution in the present context may have different meanings for various tasks performed by the ML algorithms e.g. "within distribution" data for a vision-based task of classification of a certain type of vehicle may be the image data samples all depicting that certain type of vehicle, and the "out of distribution" data may be an image data sample depicting a bicycle. In some examples, irregular shapes, unusual color or lighting of painted objects, or any other attributes may be considered.

Thus, the presented systems and methods may be similarly applied for determination of discrepancy 205 in the prediction output of ML algorithm ensemble clusters 100 being configured to solve classification or segmentation tasks. For example, for a classification task, probabilistic scores may be utilized for comparison of the prediction outputs of the ML algorithms of the ensembles 100a - 100n to determine if a certain input data sample belongs to a certain data class or if it is an OOD data sample for that data class.

However, when an input data sample is an OOD sample leading to discrepancy in the prediction output of the ensembles 100a - 100n, the ML algorithms ML₁-MLₘ comprised in the ML algorithm ensembles 100a - 100n may produce sporadic and incompatible prediction outputs for the OOD data sample with significant variations. In some examples and embodiments, variations in the prediction outputs of the ML algorithms may be measured against a prediction output-variation threshold value. The prediction output-variation threshold value may e.g. be associated with the Euclidian distance or the cosine distance metric applied to the prediction outputs of the ML algorithms ML₁-MLₘ to the OOD input data sample. In some embodiments, a probability score may be assigned to the prediction outputs of the ML algorithms ML₁-MLₘ for each sensor data sample and when the probability score for a particular data sample falls below the variation threshold, it is determined that the particular sensor data sample is an OOD data.

Reverting to the example of the observed objects 4a-4c, the ensemble prediction output 204a of ensemble 100a to sensor data samples 200a1 - 200aj comprised in the sensor data set 200a however, produce no discrepancy 205a for any of the sensor data samples. In other words, the ML algorithms of the ensemble 100a produce congruent prediction outputs conforming to the acceptable prediction output-variation measures. Thus, the discrepancy is absent for the prediction output 204a of the ensemble 100a for the observations of the LIDAR sensor device 324a. Thus, the discrepancy "NO" belonging to the second discrepancy status B is generated.

In response to establishing the above discrepancy statuses A and B, the ensemble-prediction output 204a of the at least one ML algorithm ensemble 100a associated with the absent determined discrepancy i.e. the second discrepancy status B is selected for generating 207 an annotation as shown in Fig. 1c. The annotation is generated for the one or more data samples 200b1 in this example, of the sensor data set 200b of the at least one ML algorithm ensemble 100b associated with the determined discrepancy i.e. the first discrepancy status A.

In other words, the prediction outputs of the ensemble 100a associated with the scenario captured by the corresponding LIDAR sensor are utilized for annotating the anomalous OOD sensor data sample, creating the prediction output discrepancy in ML ensemble 100b, captured by the camera sensor for the same scenario.

By way of example, one approach for forming such an annotation for the above example of congruent LIDAR-associated predictions and OOD camera-associated predictions may be executed by using the motion model of each e.g. vehicle 1 and/or external vehicles such as vehicle 2 to extrapolate the point cloud and associated detections of the LIDAR to the timestamp of the camera frame.

In some embodiments, point cloud data from two or more LIDAR sensors may be interpolated. Using the knowledge of where the camera sensor is mounted on the vehicle 1 and lens properties of the camera sensor, the 3D LIDAR detection may then be projected onto the captured 2D camera image from the observed scenario. This way the 3D prediction output generated by the LIDAR-associated ensembles such as ensemble 100a can be used for generating annotations for the 2D camera images i.e. one or more OOD data samples.

An updated first training data set is formed based at least on the generated annotation for the one or more OOD data samples (sample 200b1 in this example) of the sensor data set 200b of the at least one ML algorithm ensemble (ensemble 100b in this example) associated with the determined discrepancy 205b.

The first training data set may be continuously updated as new OOD input data samples emerge. In some exemplary embodiments, a second training data set may be formed based on one or more identified OOD samples. In several exemplary embodiments, the first training data set may be updated with the second training data set formed based on the one or more OOD sensor data samples. Obtaining, analyzing, identifying and annotating OOD samples, as well as updating the first training data set may be performed in various time intervals which may be predetermined and scheduled e.g. with hourly, daily, weekly or monthly plans. Each or some of the above functions and processes may also be performed online i.e. as soon as sensor data samples are gathered and sensor data sets for the ML algorithm ensembles are formed. All or some of the above functions may at least partly be executed locally by the control system 10 of the vehicles 1, 2. Additionally or alternatively, the control system 15b of the server 15 may be configured to execute all or some of the above functions and processes.

It should be clear to the skilled person that several OOD input data samples i.e. more than one sensor data sample may create anomalous prediction outputs and thus multiple OOD sensor data samples may be annotated and added to the first or second training data sets. It should also be appreciated that more than one ML ensemble amongst the plurality of ML ensembles 100a - 100n may generate OOD prediction outputs for one or more data samples of its designated sensor data set. Similarly, it should be appreciated that one or more ML ensembles amongst the plurality of ensembles 100a - 100n comprised in the cluster 100 may generate congruent prediction outputs without any determined discrepancy for the same observed scenario. Therefore, in several aspects and embodiments, the prediction output of one or more ML ensembles 204a, 204n associated with the absence of determined discrepancy may be used for generation of annotations e.g. as shown for ensembles 100a and 100n in Fig. 1c and their respective prediction outputs 204a and 204n. In some embodiments, when more than one ML ensemble generates congruent prediction outputs, the prediction outputs of the congruent ML ensembles may be compared with each other and the most accurate prediction output representative of the observed scenario may be elected for generating the annotations for the one or more OOD data samples. Additionally or alternatively, in some embodiments, the prediction outputs of the one or more congruent ML ensembles may be merged or fused and the fused prediction output may be utilized for generating the annotations for the one or more OOD data samples.

In several embodiments, the identified one or more OOD data samples may be transmitted to the remote server 15 for annotation. The one or more OOD data samples may be annotated manually e.g. by human operators and/or automatically. The generated annotations may then be used for forming the updated training data set for the ML algorithms.

In some embodiments, the control system 10 of the vehicles 1, 2 may be configured to store the one or more OOD data samples in a memory 12 of the vehicles and generate the corresponding annotations for the one or more OOD data samples. In other words, the vehicles 1, 2 may be configured for automatically generating the annotations for the one or more OOD data samples by means of the processing circuitry 11 of the control system 10 of the vehicle and without the need for transmission of the one or more OOD data samples to the remote server 15 for processing. Automatically generated annotations may similarly be used for forming the updated training data set for the ML algorithms of the ML ensembles associated with the identified discrepancy.

In several embodiments, the annotated one or more OOD data samples may be transmitted to the remote server 15 for forming the updated first training data set. In several aspects and embodiments, the updated first data set may be formed in each vehicle 1, 2, e.g., by means of a control system 10 of the vehicle 1, 2 and the formed updated first training data set may be transmitted to the remote server 15 for centrally training the at least one ML algorithm ensemble (ensemble 100b in this example) associated with the determined discrepancy 205b.

In several embodiments, unprocessed sensor data may be transmitted to the server 15 or may be stored in a memory 12 of the vehicle 1, 2 for future transmission to the server 15 and/or for local utilization in the vehicle 1, 2. In some embodiments, the unprocessed sensor data may be continuously transmitted from the vehicles 1, 2 to the server 15 and utilized by the control system 15b of the server 15 to execute all or some of the above functions and processes e.g. for identification and annotation of OOD data samples.

In several aspects and embodiments, the at least one ML algorithm ensemble (ensemble 100b in this example) associated with the determined discrepancy 205b may be trained in a decentralized federated learning setting performed in the vehicle 1, 2. This way the ML algorithms will be trained in the setting referred to as edge training setting that comprises federated or swarm learning schemes.

In several embodiments, the federated learning training may comprise updating one or more model parameters of each ML algorithm comprised in the ML algorithm ensemble (ensemble 100b in this example) associated with the determined discrepancy 205b based on the formed updated first training data set. In several embodiments and aspects, the one or more updated model parameters of the ML algorithms may be transmitted to the remote server 15 and a set of globally updated model parameters of the ML algorithms may be received from the remote server 15. The set of globally updated parameters may be based on information comprising the one or more updated model parameters of the ML algorithms obtained from the plurality of vehicles 1, 2 i.e. the fleet of vehicles.

Fig. 2 shows a schematic perspective top view of a collection of exemplary scenarios, which may occur in a surrounding environment of vehicles travelling on roads, in accordance with several embodiments of the present disclosure. Scenario in the present context comprises any one of observing an event or observing an object in the surrounding environment of the vehicle. The object may be any type of object present on the road examples of which may include traffic objects, debris, construction materials, different vegetation, fallen trees, other vehicles, roadside obstacles, etc. The object may comprise a traffic object such as a traffic sign or signal such as traffic lights or warning signs, etc. The object may further comprise wild life or various species of animals, pedestrians, external vehicles, road barriers, lane markers, speed bumps, alterations on the road surface etc. The event may comprise occurrence of any incidents, circumstances, accidents, actions or movements, various lighting or color nuances occurring in the scenes, environmental conditions, road conditions, etc. in the surrounding environment of the vehicle. Associated attributes of objects and events such as physical attributes, etc., may also be observed and captured.

Needless to mention that the depicted scenarios comprising objects, events, incidents and scenes in Fig. 2 are simply there to elucidate the functionalities and implementations of the systems and methods disclosed herein.

Fig. 2 illustrates a vehicle 1 in a hatched line shaded pattern traveling on a portion 24 of a road 22. Moreover, Fig. 1 shows at least one external vehicle 2 traveling on the same portion 24 of a road 22 as the vehicle 1. The vehicles 1, 2 in several embodiments and aspects comprise a sensor system 320 configured for detecting the scenarios which may occur in the surrounding environment of vehicles 1, 2 travelling on road 22. The sensor system 320 is configured for collection of information about the surrounding environment of the vehicles 1, 2. The surrounding environment of the vehicle can be understood as a general area around the vehicle 1, 2 in which scenarios comprising objects (such as other vehicles, landmarks, obstacles, etc.) or scenes can be detected and identified by vehicle sensors (radar, LIDAR, cameras, etc.), i.e. within a sensor range of the vehicle. In several embodiments and aspects, the sensor data comprising information about the surrounding environment of the vehicles may be utilized to generate labelled i.e. annotated data samples and data classifications for forming the training data set for the ML ensembles. The first training data set is used for training each of the ML algorithms comprised in the ML algorithm ensembles as explained with reference to Fig. 1a. In Fig. 2, by way of example it is shown that the sensor system of vehicle one comprises one or more camera sensor devices 324b and one or more LIDAR sensor devices 324a.

Vehicle 2 may be an identical or similar vehicle to the vehicle 1 i.e. having the same or similar functionalities and components and capable of executing and performing various aspects of the presented technology herein. Vehicle 1 and vehicle 2 may be a part of a fleet of vehicles travelling on roads such as road 22. In several embodiments and aspects data from the fleet of vehicles comprising one or more vehicles 1, 2 may be collected and analyzed as explained with reference to Figs. 1a - 1c.

The vehicle 1 and/or the at least one external vehicle 2 may comprise an Automated Driving System (ADS). In the present context, the ADS comprises both ADAS and AD systems. In some embodiments, the ADS of the vehicle may comprise one or more ADS features that are preferably a level 2 feature or higher according to SAE J3016 levels of driving automation for on-road vehicles. In the present context, an ADS feature may be in the form of an autopilot feature, a traffic jam pilot, a highway pilot, or any other SAE J3016 level 2+ ADS feature.

The vehicle 1, 2 comprises a control system 10 or otherwise referred to as the control apparatus 10 which may be a separate entity or may be a part of the overall ADS architecture of the vehicle, and may accordingly be a module or component of the ADS. The control system 10 of the vehicle 1, 2 comprises control circuitry 11 or otherwise referred to as processing circuitry 11 configured to obtain data comprising information about the surrounding environment of the vehicle 1. As mentioned earlier, the information and data of the surrounding environment of the vehicle 1, 2 may be obtained from the sensor system 320 of the vehicle.

The obtained sensor data may comprise information about at least one static or moving object in the surrounding environment of the vehicle. As depicted in Fig. 2, there is at least one object 4a, 4b, 4c present in the surrounding environment of the vehicle 1 and vehicle 2 on the road portion 24. The at least one object 4a, 4b, 4c may be a traffic object such a traffic sign or signal such as traffic lights or warning signs, etc. or in some embodiments may include wild life or various species of animals 4b, pedestrians 4c, external vehicles, road barriers, lane markers etc. The at least one object may be intentionally arranged such as the traffic object 4a or may be present on the road 22 at certain occasions such as the pedestrian 4c or the animal 4b crossing the road 22.

Further, the obtained sensor data may comprise information about any one of lane marker 241, 242 geometry on the one or more lanes of the road 22, lane marker type (e.g. solid, dashed, double marker, etc.) on the road 22, traffic sign information 4a, road barrier information, such as presence or characteristics of speed bumps, or any other road obstruction objects, etc.

In several aspects and embodiments, the sensor data may comprise one or more images of the surrounding environment of the vehicle being captured by a vehicle-mounted camera 324b as a part of the sensor system 320. The camera in the present context also includes a plurality of vehicle-mounted cameras mounted on several parts of the vehicle 1, 2 for capturing images of a surrounding environment of the vehicle. Furthermore, the sensor data may comprise LIDAR 324a or radar (not shown) observations of the surrounding environment of the vehicle 1, 2.

The captured images and/or LIDAR and/or radar data may be stored locally in the memory 12 of the vehicle 1, 2 and/or be transmitted to an external network 20 such as a cloud network 20, or to the remote server 15 with which the vehicle 1, 2 is in communication.

In several examples and embodiments the road 22 may be any type of road e.g. part of a motorway, freeway or expressway. The road may also be a country road, rural road or any other carriageway. The road may have a plurality of lanes such as more than one lane in the same travelling direction e.g. two or more lanes 22a, 22b or at least one lane in each travelling direction as is usually the case for rural roads. The road 22 has two lanes 22a and 22b extending in the same direction in this example. The lanes 22a, 22b may comprise lane markers 241, 242 of different types e.g. lane marker 241 showing dashed lane marker type and the lane marker 242 showing solid lane marker type.

The control system 10 of the vehicle 1, 2 may accordingly be configured to register the scenarios occurring in the surrounding environment of the vehicles 1, 2. The scenarios in some embodiments may correspond to a scene or an event or an incident which may occur in the surrounding environment of the vehicles. In some embodiments a scenario may be determining a presence of at least one object 4a, 4b, 4c in the surrounding environment of the vehicle 1, 2 based on the obtained sensor data. In addition, registering scenarios in the present context may further comprise semantic segmentation approaches for lane detection or road surface detection, etc.

For instance in Fig. 2, determination of presence of the traffic object 4a, the pedestrian 4c or the animal 4b may correspond to various scenarios occurring in the surrounding environment of the vehicle 1, 2. Furthermore, the pedestrian 4c crossing the road 22 in the direction of arrow 4c1, and/or the animal 4b moving towards vehicle 1 in the direction of arrow 4b1, and/or a driving behavior of either of the vehicles 1 or 2 from perspective of the other vehicle, also constitute a variety of scenarios in the surrounding environment of the vehicle 1, 2.

Additionally, occasions of identification and recognition of two or more of the above-mentioned scenarios give rise to additional combined scenarios that may be determined and registered. The environmental conditions such as the road conditions, time of day, lighting conditions, unforeseen incidents and accidents on the road 22, weather conditions 243 in the area 24 e.g. the amount of precipitation, humidity, temperature, etc. which may co-occur with any of the above-mentioned scenarios may further give rise to a whole new range of scenarios with multiple associated variables. The events and scenarios, which may occur at a certain time point, on a certain geographical location and for a certain vehicle 1, 2 may thus be numerous, giving rise to a significant number of rare and challenging circumstances that may introduce vital information gaps into the training regime of ML algorithms. Each of these scenarios may be observed and captured by at least two sensor devices of the sensor system 320. The at least two sensor devices may comprise at least two different types of sensor devices e.g. a camera sensor device and a LIDAR or radar sensor device, and so forth.

In several embodiments, the sensor data may be obtained from a memory 15a of the server 15. In some embodiments and examples, the sensor data may at least partly be obtained in real time from the sensor system 320. In some exemplary embodiments, the sensor data for forming sensor data sets may at least partly be obtained in scheduled time intervals e.g. from the memory unit 12 or may be data captured by the sensor system 320 and stored at least partly in the data storage 15a of the server 15.

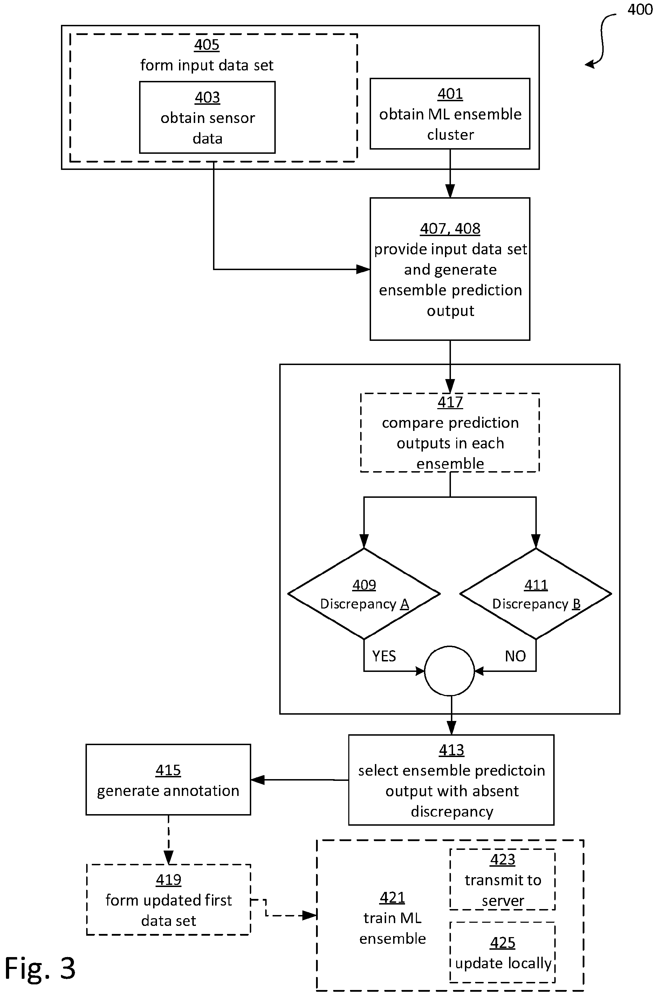

Fig. 3 shows a flowchart of a method **400** according to various aspects and embodiments of the present disclosure and with reference to the technology presented in Figs. 1a - 1c. The method comprises obtaining **401** a cluster 100 of trained ensembles 100a - 100n of machine learning, ML, algorithms. The cluster comprises two or more ML algorithm ensembles 100a - 100n, wherein each ML ensemble comprises a plurality of ML algorithms ML₁-MLₘ that are trained at least partly based on a first set of training data. The method may further comprise forming **405** an input data set for the cluster 100 of trained ensembles 100a - 100n of ML algorithms. The input data set comprises sensor data sets 200a - 200n, each sensor data set designated to its corresponding ML algorithm ensemble.

The method **400** further comprises obtaining **403** sensor data representative of a scenario, in a surrounding environment of a vehicle 1, 2, observed by at least two sensor devices 324 comprised in a sensor system 320 of the vehicle. The sensor data comprises at least two sensor data sets 200a - 200n, wherein each sensor data set comprises information provided by a designated sensor device of the at least two sensor devices. Each sensor data set comprises one or more data samples 200a1-200aj, 200b1- 200bj, . . . . , 200n1- 200nj being representative of the observed scenario. The method **400** further comprises providing **407** each obtained sensor data set as input to a corresponding ML algorithm ensemble being comprised in the ML algorithm ensemble cluster 100 wherein each ML algorithm ensemble is related to a corresponding sensor device of the at least two sensor devices.

The method **400** further comprises generating **408,** by each ML algorithm ensemble, an ensemble-prediction output 204a - 204n for each of the one or more data samples 200a1- 200aj, 200b1- 200bj, . . . . , 200n1- 200nj of its corresponding sensor data set 200a - 200n. The generated ensemble-prediction output 204a - 204n by each ML algorithm ensemble 100a - 100n for each of its corresponding one or more data samples 200a1- 200aj, 200b1- 200bj, .... , 200n1- 200nj comprises prediction outputs 100a1 - 100am, 100b1 - 100bm, . . . . , 100n1 - 100nm generated by each of the ML algorithms comprised in that ML algorithm ensemble for that sample of the one or more data samples.

In response to a determined discrepancy **409** for the ensemble-prediction output of at least one ML algorithm ensemble of the two or more ML algorithm ensembles, and an absence **411** of a determined discrepancy for the ensemble-prediction output for of at least one other ML algorithm ensemble of the two or more ML algorithm ensembles, the method **400** further comprises: selecting **413** the ensemble-prediction output of the at least one ML algorithm ensemble associated with the absent determined discrepancy for generating **415** an annotation for the one or more data samples of the sensor data set of the at least one ML algorithm ensemble associated with the determined discrepancy.

In several embodiments, the at least two sensor devices may comprise any one of a vehicle-mounted camera, and a LIDAR, and a radar.

In several embodiments, the scenario comprises any one of observing an event or observing an object in the surrounding environment of the vehicle.

In several embodiments and aspects, the method **400** may further comprise determining the discrepancy in the ensemble-prediction output for each ensemble by comparing **417,** for each of the one or more data samples, the prediction output of each ML algorithm of the ensemble with the prediction output of each of a rest of the ML algorithms of the ensemble for that data sample.

In several aspects and embodiments, the discrepancy in the ensemble-prediction output for each ensemble is determined when the prediction output generated, for at least one particular data sample of the one or more data samples, by at least one of the ML algorithms comprised in the ensemble is incompatible with the prediction outputs generated by the one or more of the other ML algorithms of the ensemble.

In several aspects and embodiments, the method **400** further comprises forming **419** an updated first training data set based at least on the generated annotation for the one or more data samples of the sensor data set of the at least one ML algorithm ensemble associated with the determined discrepancy.

In several embodiments, the method **400** may further comprise transmitting **423** the formed updated first training data set to a remote server 15 for centrally training **421** the at least one ML algorithm ensemble associated with the determined discrepancy. In some embodiments and aspects, one or more but not all of the ML algorithms comprised in the ensemble associated with the determined discrepancy may be trained by the updated first set of training data.

In several embodiments and aspects, the method **400** may further comprise training **421** the at least one ML algorithm ensemble in a decentralized federated learning setting performed in the vehicle i.e. locally by updating **425** one or more model parameters of each ML algorithm comprised in the ML algorithm ensemble associated with the determined discrepancy based on the formed updated first training data set. In some embodiments and aspects, one or more but not all of the ML algorithms comprised in the ensemble associated with the determined discrepancy may be trained by the updated first set of training data.

In several aspects and embodiments, the vehicle may comprise an Automated Driving System, ADS. In several aspects and embodiments, the method **400** may be performed by a control system 10 of the vehicle 1, 2 comprising processing circuitry 11 configured for performing the various embodiments and steps of the method **400.** In several aspects and embodiments, the method **400** may be performed by a control system 15b of a server 15 or data center 15 comprising processing circuitry configured for performing the various embodiments and steps of the method **400.**

It should be noted that all the embodiments, elements, features, examples and advantages described earlier with reference to the control system 10 of the vehicle 1, 2, or the processing circuitry 11 of the control system 10, or control system 15b of the server 15, and Figs. 1a-1c and Fig. 2, analogously and equally apply to various embodiments of the methods **400** described herein with reference to Fig. 3.

Executable instructions for performing these functions and embodiments of the method **400** are **included** in a non-transitory computer-readable storage medium or other computer program product configured for execution by one or more processors.

Fig. 4 is a schematic illustration of an ADS-equipped vehicle 1 comprising a control system 10, which may also be referred to as the control apparatus or device 10 or simply the apparatus 10. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the control system 10 may form a part of the ADS 310, i.e. the control system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The ADS 310 may also comprise other modules such as a path planning module 316.

According to an exemplary embodiment, there is provided a non-transitory computer-readable storage medium storing one or more programs configured to be executed by one or more processors of a vehicle control system, the one or more programs comprising instructions for performing the method according to any one of the abovediscussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As previously mentioned, it should be appreciated that parts of the described solution may be implemented either in the vehicle 1, in a system located external the vehicle 1, or in a combination of internal and external the vehicle; for instance in a server 15 in communication with the vehicle, a so called cloud solution. The different features and steps of the embodiments may be combined in other combinations than those described.

## Claims

1. A computer-implemented method (400) comprising:
obtaining (401) a machine learning, ML, model ensemble cluster comprising two or more ML model ensembles, wherein each ML model ensemble comprises a plurality of ML models trained at least partly with a first training data set; wherein each ML model of each ML model ensemble is configured to process as input a sensor data sample and to output a prediction output for solving an object detection, classification, or segmentation task;
obtaining (403) sensor data representative of a scenario in a surrounding environment of a vehicle, observed by at least two sensor devices comprised in a sensor system of the vehicle;
the sensor data comprising at least two sensor data sets, wherein each sensor data set comprises information provided by a designated sensor device of the at least two sensor devices; and wherein each sensor data set comprises one or more data samples being representative of the observed scenario;providing (407) each obtained sensor data set as input to a corresponding ML model ensemble being comprised in the ML model ensemble cluster;
wherein each ML model ensemble is related to a corresponding sensor device,
generating (408), by each ML model ensemble, an ensemble-prediction output for each of the one or more data samples of its corresponding sensor data set;
wherein the generated ensemble-prediction output by each ML model ensemble for each of its corresponding one or more data samples comprises prediction outputs generated by each of the ML models comprised in that ML model ensemble for that sample of the one or more data samples;
in response to:
a determined discrepancy (409) for the ensemble-prediction output of at least one ML model ensemble of the two or more ML model ensembles, and an absence (411) of a determined discrepancy for the ensemble-prediction output of at least one other ML model ensemble of the two or more ML model ensembles, the method (400) further comprises:
selecting (413) the ensemble-prediction output of the at least one ML model ensemble associated with the absent determined discrepancy for generating (415) an annotation for the one or more data samples of the sensor data set of the at least one ML model ensemble associated with the determined discrepancy; and
forming (419) an updated first training data set based at least on the generated (415) annotation for the one or more data samples of the sensor data set of the at least one ML model ensemble associated with the determined discrepancy for training the at least one ML model ensemble associated with the determined discrepancy to solve the task by using the updated first training data set.

2. The method (400) according to claim 1, wherein the at least two sensor devices comprise any one of a vehicle-mounted camera, and a Lidar, and a radar.

3. The method (400) according to any one of claims 1 or 2, wherein the scenario comprises any one of observing an event or observing an object in the surrounding environment of the vehicle.

4. The method (400) according to any one preceding claims, wherein the method further comprises:
determining the discrepancy in the ensemble-prediction output for each ensemble by comparing (417), for each of the one or more data samples, the prediction output of each ML model of the ensemble with the prediction output of each of a rest of the ML models of the ensemble for that data sample.

5. The method (400) according to claim 4, wherein the discrepancy in the ensemble-prediction output for each ensemble is determined when the prediction output generated, for at least one particular data sample of the one or more data samples, by at least one of the ML models comprised in the ensemble is incompatible with the prediction outputs generated by the one or more of the other ML models of the ensemble.

6. The method (400) according to claim 1, wherein the method further comprises:
transmitting (423) the formed updated first training data set to a remote server for centrally training the at least one ML model ensemble associated with the determined discrepancy.

7. The method (400) according to claim 1, wherein the method further comprises:
training (421) the at least one ML model ensemble in a decentralized federated learning setting performed in the vehicle by:
updating (425) one or more model parameters of each ML model comprised in the ML model ensemble associated with the determined discrepancy based on the formed updated first training data set.

8. The method (400) according to any one of the preceding claims, wherein the vehicle comprises an Automated Driving System, ADS.

9. The method (400) according to any one of the preceding claims, wherein the method is performed by a processing circuitry of the vehicle.

10. A computer-readable storage medium comprising instructions which, when executed by one or more processors of an in-vehicle computer, causes the in-vehicle computer to carry out the method (400) according to any one of claims 1- 9.

11. A computer program product comprising instructions which, when the program is executed by one or more processors of an in-vehicle computer, causes the in-vehicle computer to carry out the method (400) according to any one of claims 1- 9.

12. A system (10, 15) comprising processing circuitry (11, 15b) configured to:
obtain a machine learning, ML, model ensemble cluster (100) comprising two or more ML model ensembles (100a-100n), wherein each ML model ensemble comprises a plurality of ML models (ML₁-MLₘ) trained at least partly with a first training data set;
wherein each ML model of each ML model ensemble is configured to process as input a sensor data sample and to output a prediction output for solving an object detection, classification or segmentation task;
obtain sensor data representative of a scenario in a surrounding environment of a vehicle (1), observed by at least two sensor devices (324a, 324b) comprised in a sensor system (320) of the vehicle;
the sensor data comprising at least two sensor data sets (200a-200n), wherein each sensor data set comprises information provided by a designated sensor device of the at least two sensor devices; and wherein each sensor data set comprises one or more data samples (200a1- 200aj, 200b1- 200bj ... 200n1- 200nj) being representative of the observed scenario;
provide each obtained sensor data set as input to a corresponding ML model ensemble (100a-100n) being comprised in the ML model ensemble cluster (100); wherein each ML model ensemble is related to a corresponding sensor device of the at least two sensor devices (324a, 324b);
generate, by each ML model ensemble (100a-100n), an ensemble-prediction output (204a-204n) for each of the one or more data samples of its corresponding sensor data set (200a-200n);
wherein the generated ensemble-prediction output (204a-204n) by each ML model ensemble (100a-100n) for each of its corresponding one or more data samples comprises prediction outputs (100a1 - 100am ... 100n1 - 100nm) generated by each of the ML models (ML₁-MLₘ) comprised in that ML model ensemble for that sample of the one or more data samples;
in response to:
a determined discrepancy (206b) for the ensemble-prediction output of at least one ML model ensemble of the two or more ML model ensembles (100a-100n), and an absence (206a, 206n) of a determined discrepancy for the ensemble-prediction output of at least one other ML model ensemble of the two or more ML model ensembles (100a, 100n), the processing circuitry (11, 15b) is further configured to:
select the ensemble-prediction output of the at least one ML model ensemble associated with the absent (206a, 206n) determined discrepancy for generating (207) an annotation for the one or more data samples of the sensor data set of the at least one ML model ensemble associated with the determined discrepancy
form an updated first training data set based at least on the generated annotation for the one or more data samples of the sensor data set of the at least one ML model ensemble associated with the determined discrepancy for training the at least one ML model ensemble associated with the determined discrepancy to solve the task by using the updated first training data set.

13. The system (10, 15) according to claim 12, wherein the processing circuitry (11, 15b) is further configured to:
determine the discrepancy in the ensemble-prediction output for each ensemble by comparing, for each of the one or more data samples, the prediction output of each ML model of the ensemble with the prediction output of each of a rest of the ML models of the ensemble for that data sample.

14. A vehicle (1) comprising:
one or more vehicle-mounted sensors (324) configured to monitor a surrounding environment of the vehicle;
a localization system (312) configured to monitor a geographical position of the vehicle; and
a system (10) according to any one of claims 12 or 13.

## Patentansprüche

1. Computerimplementiertes Verfahren (400), umfassend:
Erlangen (401) eines Maschinenlern-Modell-Ensemble-Clusters, ML-Modell-Ensemble-Clusters, umfassend zwei oder mehrere ML-Modell-Ensembles, wobei jedes ML-Modell-Ensemble eine Vielzahl von ML-Modellen umfasst, die zumindest teilweise mit einem ersten Trainingsdatensatz trainiert wurden; wobei jedes ML-Modell eines jeden ML-Modell-Ensembles dazu konfiguriert ist, eine Sensordatenprobe als Eingabe zu verarbeiten und eine Vorhersageausgabe auszugeben, um eine Objekterkennungs-, Klassifizierungs- oder Segmentierungsaufgabe zu lösen;
Erlangen (403) von Sensordaten, die für ein Szenario in einer umliegenden Umgebung eines Fahrzeugs repräsentativ sind, die durch mindestens zwei Sensorvorrichtungen, die in einem Sensorsystem des Fahrzeugs umfasst sind, beobachtet wird;
wobei die Sensordaten mindestens zwei Sensordatensätze umfassen, wobei jeder Sensordatensatz Informationen umfasst, die durch eine bestimmte Sensorvorrichtung der mindestens zwei Sensorvorrichtungen bereitgestellt werden; und wobei jeder Sensordatensatz eine oder mehrere Datenproben umfasst, die für das beobachtete Szenario repräsentativ sind; Bereitstellen (407) jedes erlangten Sensordatensatzes als Eingabe für ein entsprechendes ML-Modell-Ensemble, das in dem ML-Modell-Ensemble-Cluster umfasst ist;
wobei jedes ML-Modell-Ensemble auf eine entsprechende Sensorvorrichtung bezogen ist,
Erzeugen (408), durch jedes ML-Modell-Ensemble, einer Ensemblevorhersageausgabe für jede der einen oder der mehreren Datenproben seines entsprechenden Sensordatensatzes;
wobei die erzeugte Ensemblevorhersageausgabe durch jedes ML-Modell-Ensemble für jede seiner entsprechenden einen oder mehreren Datenproben Vorhersageausgaben umfasst, die durch jedes der ML-Modelle, die in diesem ML-Modell-Ensemble für diese Probe der einen oder der mehreren Datenproben umfasst sind, erzeugt werden;
als Reaktion auf:
eine festgestellte Diskrepanz (409) bei der Ensemblevorhersageausgabe mindestens eines ML-Modell-Ensembles der zwei oder der mehreren ML-Modell-Ensembles und ein Fehlen (411) einer festgestellten Diskrepanz bei der Ensemblevorhersageausgabe mindestens eines anderen ML-Modell-Ensembles der zwei oder der mehreren ML-Modell-Ensembles umfasst das Verfahren (400) ferner:
Auswählen (413) der Ensemblevorhersageausgabe des mindestens einen ML-Modell-Ensembles, das mit der fehlenden festgestellten Diskrepanz verknüpft ist, um eine Annotation für die eine oder die mehreren Datenproben des Sensordatensatzes des mindestens einen ML-Modell-Ensembles, das mit der festgestellten Diskrepanz verknüpft ist, zu erzeugen (415); und
Erstellen (419) eines aktualisierten ersten Trainingsdatensatzes, der zumindest auf der erzeugten (415) Annotation für die eine oder die mehreren Datenproben des Sensordatensatzes des mindestens einen ML-Modell-Ensembles, das mit der festgestellten Diskrepanz verknüpft ist, basiert, um das mindestens eine ML-Modell-Ensemble, das mit der festgestellten Diskrepanz verknüpft ist, dazu zu trainieren, die Aufgabe unter Verwendung des aktualisierten ersten Trainingsdatensatzes zu lösen.

2. Verfahren (400) nach Anspruch 1, wobei die mindestens zwei Sensorvorrichtungen ein beliebiges aus einer am Fahrzeug montierten Kamera, einem Lidar oder einem Radar umfassen.

3. Verfahren (400) nach einem der Ansprüche 1 oder 2, wobei das Szenario ein beliebiges aus Beobachten eines Ereignisses oder Beobachten eines Objekts in der umliegenden Umgebung des Fahrzeugs umfasst.

4. Verfahren (400) nach einem der vorhergehenden Ansprüche, wobei das Verfahren ferner Folgendes umfasst:
Feststellen der Diskrepanz in der Ensemblevorhersageausgabe für jedes Ensemble durch Vergleichen (417), für jede der einen oder der mehreren Datenproben, der Vorhersageausgabe jedes ML-Modells des Ensembles mit der Vorhersageausgabe jedes eines Rests der ML-Modelle des Ensembles für diese Datenprobe.

5. Verfahren (400) nach Anspruch 4, wobei die Diskrepanz in der Ensemblevorhersageausgabe für jedes Ensemble festgestellt wird, wenn die Vorhersageausgabe, die für mindestens eine einzelne Datenprobe der einen oder der mehreren Datenproben durch mindestens eines der ML-Modelle, die in dem Ensemble umfasst sind, erzeugt wird, mit den Vorhersageausgaben, die durch das eine oder die mehreren der anderen ML-Modelle des Ensembles erzeugt werden, nicht kompatibel ist.

6. Verfahren (400) nach Anspruch 1, wobei das Verfahren ferner Folgendes umfasst:
Übertragen (423) des erstellten aktualisierten ersten Trainingsdatensatzes an einen Remote-Server für ein zentrales Trainieren des mindestens einen ML-Modell-Ensembles, das mit der festgestellten Diskrepanz verknüpft ist.

7. Verfahren (400) nach Anspruch 1, wobei das Verfahren ferner Folgendes umfasst:
Trainieren (421) des mindestens einen ML-Modell-Ensembles in einer dezentralen Umgebung für föderiertes Lernen, das in dem Fahrzeug durchgeführt wird, durch:
Aktualisieren (425) eines oder mehrerer Modellparameter eines jeden ML-Modells, das in dem ML-Modell-Ensemble, das mit der festgestellten Diskrepanz verknüpft ist, umfasst ist, basierend auf dem erstellten aktualisierten ersten Trainingsdatensatz.

8. Verfahren (400) nach einem der vorhergehenden Ansprüche, wobei das Fahrzeug ein automatisiertes Fahrsystem, ADS, umfasst.

9. Verfahren (400) nach einem der vorhergehenden Ansprüche, wobei das Verfahren durch eine Verarbeitungsschaltung des Fahrzeugs durchgeführt wird.

10. Computerlesbares Speichermedium, umfassend Anweisungen, die, wenn sie durch einen oder mehrere Prozessoren eines fahrzeuginternen Computers ausgeführt werden, den fahrzeuginternen Computer dazu veranlassen, das Verfahren (400) nach einem der Ansprüche 1-9 umzusetzen.

11. Computerprogrammprodukt, umfassend Anweisungen, die, wenn das Programm durch einen oder mehrere Prozessoren eines fahrzeuginternen Computers ausgeführt wird, den fahrzeuginternen Computer dazu veranlassen, das Verfahren (400) nach einem der Ansprüche 1-9 umzusetzen.

12. System (10, 15), umfassend Verarbeitungsschaltung (11, 15b), die zu Folgendem konfiguriert ist:
Erlangen eines Maschinenlern-Modell-Ensemble-Clusters, ML-Modell-Ensemble-Clusters (100), umfassend zwei oder mehrere ML-Modell-Ensembles (100a-100n), wobei jedes ML-Modell-Ensemble eine Vielzahl von ML-Modellen (ML₁- MLₘ) umfasst, die zumindest teilweise mit einem ersten Trainingsdatensatz trainiert wurden;
wobei jedes ML-Modell eines jeden ML-Modell-Ensembles dazu konfiguriert ist, eine Sensordatenprobe als Eingabe zu verarbeiten und eine Vorhersageausgabe auszugeben, um eine Objekterkennungs-, Klassifizierungs- oder Segmentierungsaufgabe zu lösen;
Erlangen von Sensordaten, die für ein Szenario in einer umliegenden Umgebung eines Fahrzeugs (1) repräsentativ sind, die durch mindestens zwei Sensorvorrichtungen (324a, 324b), die in einem Sensorsystem (320) des Fahrzeugs umfasst sind, beobachtet wird;
wobei die Sensordaten mindestens zwei Sensordatensätze (200a-200n) umfassen, wobei jeder Sensordatensatz Informationen umfasst, die durch eine bestimmte Sensorvorrichtung der mindestens zwei Sensorvorrichtungen bereitgestellt werden; und wobei jeder Sensordatensatz eine oder mehrere Datenproben (200a1 - 200aj, 200b1 - 200bj ... 200n1 - 200nj) umfasst, die für das beobachtete Szenario repräsentativ sind;
Bereitstellen jedes erlangten Sensordatensatzes als Eingabe für ein entsprechendes ML-Modell-Ensemble (100a-100n), das in dem ML-Modell-Ensemble-Cluster (100) umfasst ist; wobei jedes ML-Modell-Ensemble auf eine entsprechende Sensorvorrichtung der mindestens zwei Sensorvorrichtungen (324a, 324b) bezogen ist;
Erzeugen, durch jedes ML-Modell-Ensemble (100a-100n), einer Ensemblevorhersageausgabe (204a-204n) für jede der einen oder der mehreren Datenproben seines entsprechenden Sensordatensatzes (200a-200n);
wobei die erzeugte Ensemblevorhersageausgabe (204a-204n) durch jedes ML-Modell-Ensemble (100a-100n) für jede seiner entsprechenden einen oder mehreren Datenproben Vorhersageausgaben (100a1 - 100am ... 100n1 - 100nm) umfasst, die durch jedes der ML-Modelle (ML₁-MLₘ), die in diesem ML-Modell-Ensemble für diese Probe der einen oder der mehreren Datenproben umfasst sind, erzeugt werden;
als Reaktion auf:
eine festgestellte Diskrepanz (206b) bei der Ensemblevorhersageausgabe mindestens eines ML-Modell-Ensembles der zwei oder der mehreren ML-Modell-Ensembles (100a-100n) und ein Fehlen (206a, 206n) einer festgestellten Diskrepanz bei der Ensemblevorhersageausgabe mindestens eines anderen ML-Modell-Ensembles der zwei oder der mehreren ML-Modell-Ensembles (100a, 100n) ist die Verarbeitungsschaltung (11, 15b) ferner zu Folgendem konfiguriert:
Auswählen der Ensemblevorhersageausgabe des mindestens einen ML-Modell-Ensembles, das mit der fehlenden (206a, 206n) festgestellten Diskrepanz verknüpft ist, um eine Annotation für die eine oder die mehreren Datenproben des Sensordatensatzes des mindestens einen ML-Modell-Ensembles, das mit der festgestellten Diskrepanz verknüpft ist, zu erzeugen (207)
Erstellen eines aktualisierten ersten Trainingsdatensatzes, der zumindest auf der erzeugten Annotation für die eine oder die mehreren Datenproben des Sensordatensatzes des mindestens einen ML-Modell-Ensembles, das mit der festgestellten Diskrepanz verknüpft ist, basiert, um das mindestens eine ML-Modell-Ensemble, das mit der festgestellten Diskrepanz verknüpft ist, dazu zu trainieren, die Aufgabe unter Verwendung des aktualisierten ersten Trainingsdatensatzes zu lösen.

13. System (10, 15) nach Anspruch 12, wobei die Verarbeitungsschaltung (11, 15b) ferner zu Folgendem konfiguriert ist:
Feststellen der Diskrepanz in der Ensemblevorhersageausgabe für jedes Ensemble durch Vergleichen, für jede der einen oder der mehreren Datenproben, der Vorhersageausgabe jedes ML-Modells des Ensembles mit der Vorhersageausgabe jedes eines Rests der ML-Modelle des Ensembles für diese Datenprobe.

14. Fahrzeug (1), umfassend:
einen oder mehrere am Fahrzeug montierte Sensoren (324), die dazu konfiguriert sind, eine umliegende Umgebung des Fahrzeugs zu überwachen;
ein Lokalisierungssystem (312), das dazu konfiguriert ist, eine geografische Position des Fahrzeugs zu überwachen; und ein System (10) nach einem der Ansprüche 12 oder 13.

## Revendications

1. Procédé mis en œuvre par ordinateur (400) comprenant :
l'obtention (401) d'un groupe d'ensembles de modèles d'apprentissage automatique, ML, comprenant deux ou plusieurs ensembles de modèles ML, dans lequel chaque ensemble de modèles ML comprend une pluralité de modèles ML entraînés au moins partiellement avec un premier ensemble de données d'entraînement ; dans lequel chaque modèle ML de chaque ensemble de modèles ML est configuré pour le traitement en tant qu'entrée d'un échantillon de données de capteur et pour la fourniture en sortie d'une sortie de prédiction pour la résolution d'une tâche de détection, de classification, ou de segmentation d'objet ;
l'obtention (403) de données de capteur représentatives d'un scénario dans un environnement environnant d'un véhicule, observé par au moins deux dispositifs de capteur compris dans un système de capteurs du véhicule ;
les données de capteur comprenant au moins deux ensembles de données de capteur, dans lequel chaque ensemble de données de capteur comprend des informations fournies par un dispositif de capteur désigné des au moins deux dispositifs de capteur ; et dans lequel chaque ensemble de données de capteur comprend un ou plusieurs échantillons de données étant représentatifs du scénario observé ; la fourniture (407) de chaque ensemble de données de capteur obtenu en tant qu'entrée à un ensemble de modèles ML correspondant étant compris dans le groupe d'ensembles de modèles ML ;
dans lequel chaque ensemble de modèles ML est lié à un dispositif de capteur correspondant,
la génération (408), par chaque ensemble de modèles ML, d'une sortie de prédiction d'ensemble pour chacun de l'un ou plusieurs échantillons de données de son ensemble de données de capteur correspondant ;
dans lequel la sortie de prédiction d'ensemble générée par chaque ensemble de modèles ML pour chacun de ses un ou plusieurs échantillons de données correspondants comprend des sorties de prédiction générées par chacun des modèles ML compris dans cet ensemble de modèles ML pour cet échantillon de l'un ou plusieurs échantillons de données ;
en réponse à :
une discordance déterminée (409) pour la sortie de prédiction d'ensemble d'au moins un ensemble de modèles ML des deux ou plusieurs ensembles de modèles ML, et une absence (411) d'une discordance déterminée pour la sortie de prédiction d'ensemble d'au moins un autre ensemble de modèles ML des deux ou plusieurs ensembles de modèles ML, le procédé (400) comprend en outre :
la sélection (413) de la sortie de prédiction d'ensemble de l'au moins un ensemble de modèles ML associé à la discordance déterminée absente pour la génération (415) d'une annotation pour l'un ou plusieurs échantillons de données de l'ensemble de données de capteur de l'au moins un ensemble de modèles ML associé à la discordance déterminée ; et
la formation (419) d'un premier ensemble de données d'entraînement mis à jour sur la base au moins de l'annotation générée (415) pour l'un ou plusieurs échantillons de données de l'ensemble de données de capteur de l'au moins un ensemble de modèles ML associé à la discordance déterminée pour l'entraînement de l'au moins un ensemble de modèles ML associé à la discordance déterminée pour résoudre la tâche en utilisant le premier ensemble de données d'entraînement mis à jour.

2. Procédé (400) selon la revendication 1, dans lequel les au moins deux dispositifs de capteur comprennent l'un quelconque parmi une caméra montée sur le véhicule, et un Lidar, et un radar.

3. Procédé (400) selon l'une quelconque des revendications 1 ou 2, dans lequel le scénario comprend l'une quelconque parmi l'observation d'un événement ou l'observation d'un objet dans l'environnement environnant du véhicule.

4. Procédé (400) selon l'une quelconque revendications précédentes, dans lequel le procédé comprend en outre :
la détermination de la discordance dans la sortie de prédiction d'ensemble pour chaque ensemble par la comparaison (417), pour chacun de l'un ou plusieurs échantillons de données, de la sortie de prédiction de chaque modèle ML de l'ensemble avec la sortie de prédiction de chacun d'un reste des modèles ML de l'ensemble pour cet échantillon de données.

5. Procédé (400) selon la revendication 4, dans lequel la discordance dans la sortie de prédiction d'ensemble pour chaque ensemble est déterminée lorsque la sortie de prédiction générée, pour au moins un échantillon de données particulier de l'un ou plusieurs échantillons de données, par au moins l'un des modèles ML compris dans l'ensemble est incompatible avec les sorties de prédiction générées par l'un ou plusieurs des autres modèles ML de l'ensemble.

6. Procédé (400) selon la revendication 1, dans lequel le procédé comprend en outre :
la transmission (423) du premier ensemble de données d'entraînement mis à jour formé à un serveur distant pour l'entraînement centralisé de l'au moins un ensemble de modèles ML associé à la discordance déterminée.

7. Procédé (400) selon la revendication 1, dans lequel le procédé comprend en outre :
l'entraînement (421) de l'au moins un ensemble de modèles ML dans un réglage d'apprentissage fédéré décentralisé réalisé dans le véhicule par :
la mise à jour (425) d'un ou plusieurs paramètres de modèle de chaque modèle ML compris dans l'ensemble de modèles ML associé à la discordance déterminée sur la base du premier ensemble de données d'entraînement mis à jour formé.

8. Procédé (400) selon l'une quelconque des revendications précédentes, dans lequel le véhicule comprend un système de conduite automatisée, ADS.

9. Procédé (400) selon l'une quelconque des revendications précédentes, dans lequel le procédé est réalisé par une circuiterie de traitement du véhicule.

10. Support de stockage lisible par ordinateur comprenant des instructions qui, lorsque le programme est exécuté par un ou plusieurs processeurs d'un ordinateur embarqué dans un véhicule, amène l'ordinateur embarqué dans un véhicule à réaliser le procédé (400) selon l'une quelconque des revendications 1 à 9.

11. Produit programme informatique comprenant des instructions qui, lorsque le programme est exécuté par un ou plusieurs processeurs d'un ordinateur embarqué dans un véhicule, amène l'ordinateur embarqué dans un véhicule à réaliser le procédé (400) selon l'une quelconque des revendications 1 à 9.

12. Système (10, 15) comprenant une circuiterie de traitement (11, 15b) configurée pour :
l'obtention d'un groupe d'ensembles de modèles d'apprentissage automatique, ML, (100) comprenant deux ou plusieurs ensembles de modèles ML (100a-100n), dans lequel chaque ensemble de modèles ML comprend une pluralité de modèles ML (ML₁- MLₘ) entraînés au moins partiellement avec un premier ensemble de données d'entraînement ;
dans lequel chaque modèle ML de chaque ensemble de modèles ML est configuré pour le traitement en tant qu'entrée d'un échantillon de données de capteur et pour la fourniture en sortie d'une sortie de prédiction pour la résolution d'une tâche de détection, de classification ou de segmentation d'objet ;
l'obtention de données de capteur représentatives d'un scénario dans un environnement environnant d'un véhicule (1), observé par au moins deux dispositifs de capteur (324a, 324b) compris dans un système de capteurs (320) du véhicule ;
les données de capteur comprenant au moins deux ensembles de données de capteur (200a-200n), dans lequel chaque ensemble de données de capteur comprend des informations fournies par un dispositif de capteur désigné des au moins deux dispositifs de capteur ; et dans lequel chaque ensemble de données de capteur comprend un ou plusieurs échantillons de données (200a1 - 200aj, 200b1 - 200bj ... 200n1 - 200nj) étant représentatifs du scénario observé ;
la fourniture de chaque ensemble de données de capteur obtenu en tant qu'entrée à un ensemble de modèles ML correspondant (100a-100n) étant compris dans le groupe d'ensembles de modèles ML (100) ; dans lequel chaque ensemble de modèles ML est lié à un dispositif de capteur correspondant des au moins deux dispositifs de capteur (324a, 324b) ;
la génération, par chaque ensemble de modèles ML (100a-100n), d'une sortie de prédiction d'ensemble (204a-204n) pour chacun de l'un ou plusieurs échantillons de données de son ensemble de données de capteur correspondant (200a-200n) ;
dans lequel la sortie de prédiction d'ensemble générée (204a-204n) par chaque ensemble de modèles ML (100a-100n) pour chacun de son ou ses échantillons de données correspondants comprend des sorties de prédiction (100a1 - 100am ... 100n1 - 100nm) générées par chacun des modèles ML (ML₁-MLₘ) compris dans cet ensemble de modèles ML pour cet échantillon de l'un ou plusieurs échantillons de données ;
en réponse à :
une discordance déterminée (206b) pour la sortie de prédiction d'ensemble d'au moins un ensemble de modèles ML des deux ou plusieurs ensembles de modèles ML (100a-100n), et une absence (206a, 206n) d'une discordance déterminée pour la sortie de prédiction d'ensemble d'au moins un autre ensemble de modèles ML des deux ou plusieurs ensembles de modèles ML (100a, 100n), la circuiterie de traitement (11, 15b) est en outre configurée pour :
la sélection de la sortie de prédiction d'ensemble de l'au moins un ensemble de modèles ML associé à la discordance déterminée absente (206a, 206n) pour la génération (207) d'une annotation pour l'un ou plusieurs échantillons de données de l'ensemble de données de capteur de l'au moins un ensemble de modèles ML associé à la discordance déterminée
la formation d'un premier ensemble de données d'entraînement mis à jour sur la base au moins de l'annotation générée pour l'un ou plusieurs échantillons de données de l'ensemble de données de capteur de l'au moins un ensemble de modèles ML associé à la discordance déterminée pour l'entraînement de l'au moins un ensemble de modèles ML associé à la discordance déterminée pour résoudre la tâche en utilisant le premier ensemble de données d'entraînement mis à jour.

13. Système (10, 15) selon la revendication 12, dans lequel la circuiterie de traitement (11, 15b) est en outre configurée pour :
la détermination de la discordance dans la sortie de prédiction d'ensemble pour chaque ensemble par la comparaison, pour chacun de l'un ou plusieurs échantillons de données, de la sortie de prédiction de chaque modèle ML de l'ensemble avec la sortie de prédiction de chacun d'un reste des modèles ML de l'ensemble pour cet échantillon de données.

14. Véhicule (1) comprenant :
un ou plusieurs capteurs montés sur le véhicule (324) configurés pour la surveillance d'un environnement environnant du véhicule ;
un système de localisation (312) configuré pour la surveillance d'une position géographique du véhicule ; et
un système (10) selon l'une quelconque des revendications 12 ou 13.
